# EUROPEAN PATENT APPLICATION

(11) **EP 2 270 736 A1**
(43) Date of publication of application: **05.01.2011**
(21) Application number: 10166775.6
(22) Date of filing: 22.06.2010
(51) Int. Cl.: G06Q 30/00

(54) **System and method for monitoring efficacy of online advertising**

(30) Priority: 23.06.2009 US 219459 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system for determining efficacy of online advertising includes a server connected to a computer network. The server is specially adapted to provide functions for communicating with a web resource that provides a web media that contains links or JavaScript calls for causing a client device to generate a device identifier in response to a user of the client device retrieving the web media, receiving the device identifier via a network, associating and caching any impressions, clicks or conversions by the user with the device identifier, calculating total cached impressions, total cached clicks and total cached conversions associated with each unique device identifier, and displaying, for each unique device identifier, at least one of the total cached impressions, the total cached clicks, and the total cached conversions. The device identifier may be derived from a combination of a user- configurable machine parameter and a non-user-configurable machine parameter. SUCh non-user-configurable machine parameter may comprise CPU or hard disk parameters of the device or may be based on a carbon degradation characteristic or on a silicone degradation characteristic of a computer chip of the device.

## Description

This application claims priority to U.S. Provisional Application No. 61/219,459, which was filed June 23, 2009 and which is fully incorporated herein by reference.

### BACKGROUND

### Field of the Invention

The present invention is directed toward systems for monitoring and analyzing the source of device clicks, and related methods.

### Description of the Related Art

Currently, there are limited ways to analyze the effectiveness of online advertising campaigns. Existing approaches to monitoring which ads are viewed or clicked on typically involve utilizing removable cookies and jpeg tracking. Such approaches provide limited information regarding which online ads people tend to look at or what they tend to buy.

Moreover, such approaches do not provide an effective way to monitor and assess the efficacy of online advertising campaigns by tracking the impression (i.e., when a user sees an ad), clicking, and conversion (i.e., the user bought the product or subscribed to the service shown in the ad) behaviors associated with each given network device (e.g., laptop computer, tablet computer, desktop computer, PDA, mobile phone or device, etc.). Accordingly, it would be desirable to provide a system and method for generating and assigning unique device identifiers to the network devices, and analyzing the impression, clicking, and conversion behaviors associated with the device identifiers.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with techniques for determining efficacy of online advertising. For example, the method may involve: (a) communicating with a web resource that provides a web media that contains links or JavaScript calls for causing a client device to generate a device identifier in response to a user of the client device retrieving the web media; (b) receiving the device identifier via a network; (c) associating and caching any impressions, clicks, or conversions by the user with the device identifier; (d) calculating total cached impressions, total cached clicks, and total cached conversions associated with each unique device identifier; and (e) for each unique device identifier, displaying at least one of the total cached impressions, the total cached clicks, and the total cached conversions.

In related aspects, one or more of the techniques and methodologies described herein may be performed by embedded applications, platforms, or systems. The techniques implemented by a network device described herein may alternatively, or additionally, be performed by applications or components that are embedded in such devices (e.g., mobile phones, digital watches, personal digital assistants (PDAs)). It is further noted that the methods described herein may be performed by a general-purpose computer system and/or an embedded application or component of a special-purpose system.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 is a block diagram of one embodiment of a system according to the invention for monitoring and analyzing impressions, clicks, and conversions.

FIG. 2 is an illustration of an exemplary advertisement that may be shown on a web page and used in accordance with the present invention.

FIG. 3 illustrates an exemplary advertising landing page for use in accordance with the present invention.

FIG. 4 is a block diagram showing one example of memory allocation for a device identifier generated in accordance with the present invention.

FIG. 5 illustrates an exemplary report generated by the system of FIG. 1.

FIG. 6 illustrates an alternative exemplary report generated by the system of FIG. 1.

FIG. 7 illustrates aspects of one embodiment of a system for determining efficacy of online advertising according to the invention.

FIG. 8 shows one embodiment of an apparatus for determining efficacy of online advertising according to the invention.

### DETAILED DESCRIPTION

The present invention addresses the need for a system and method for assessing the effectiveness of online advertising campaigns by analyzing the impressions, clicks, and conversions associated with the unique device identifiers generated for each network device. In accordance with one aspect of the embodiments described herein, there is provided a system and method for checking device identifier information to detect click-fraud (i.e., the act of clicking ads without any intention of purchasing the product or service, thereby making an ad campaign appear more effective than it actually is) or the like. In accordance with another aspect of the embodiments described herein there is provided a system and method for generating precise analytics and thereby gaining insight into the behaviors of consumers (i.e., what they look at and what they tend to buy) who are presented with online ads - information that was previously only available via removable cookies and jpeg tracking.

Gathering Ad and User Device Data:

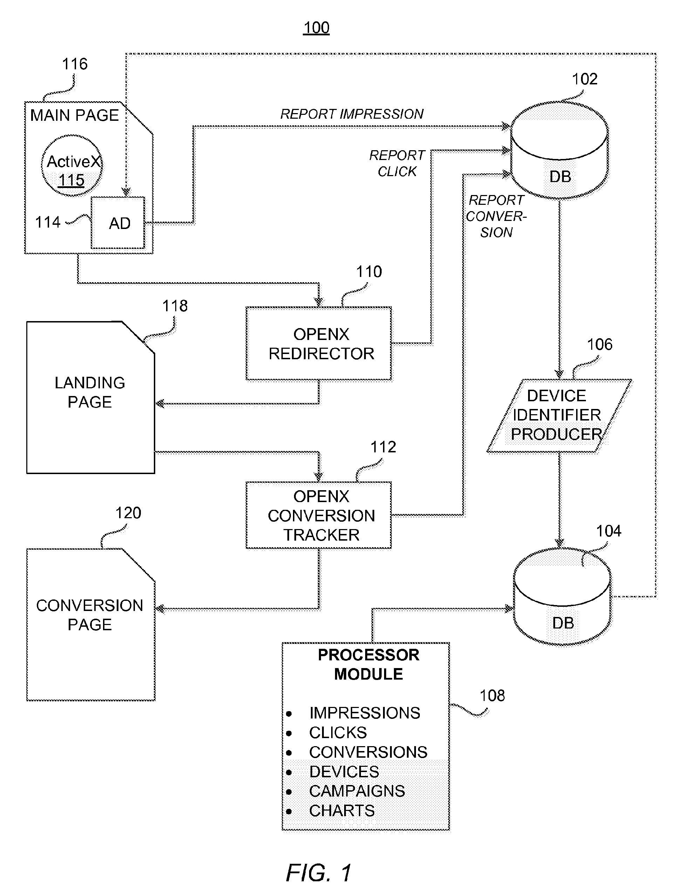

FIG. 1 illustrates an exemplary embodiment of a system 100 for monitoring and assessing the efficacy of online advertising, that generally comprises a first database 102, a second database 104, a device identifier producer 106, a processor module 108, a redirector 110, and a conversion tracker 112. These components of the system 100 may be located on a single machine or server. In the alternative, or in addition, the components may reside on multiple machines/servers.

The first database 102 may comprise a cache database in operative communication with the device identifier producer 106, the redirector 110, and the conversion tracker 112. The redirector 110 may be in operative communication with a web page 116 (i.e., an initial publisher page), an advertiser landing page 118, and the first database 102. The redirector 110 may be developed to ensure that device analytics are collected and stored in one or more databases on an advertising campaign by campaign basis.

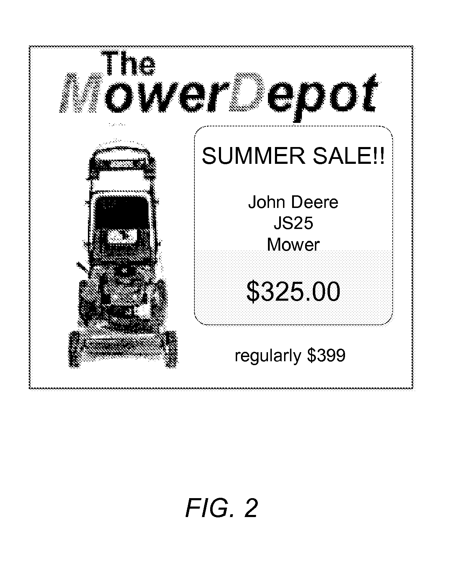

The web page 116 may comprise an advertisement 114, such as, for example, the ad 114 shown in FIG. 2. The advertisement 114 may be provided to the web page 116 by the second database. In the alternative, or in addition, the advertisement 114 may originate from another source. The conversion tracker 112 may be in operative communication with the landing page 118, an advertiser conversion page 120, and the first database 102. The second database 104 may comprise an OpenX database in operative communication with the device identifier producer 106 and the processor module 108.

In one embodiment, in response to a user of a network device accessing the web page 116 on which the advertisement 114 is displayed, the first database 102 may receive and cache an impression. This may be achieved via an ActiveX control 115 or the like (e.g., Java applet) embedded in the web page 116. Further, the ActiveX control 115 may, alone or in conjunction with other applets installed on the network device, send device data regarding the network device to the first database 102 to be stored/cached. The device data may comprise user-configurable and/or non-user-configurable machine parameters, which may be used by the device identifier producer 106 to generate a unique device identifier for the network device, as explained in further detail below.

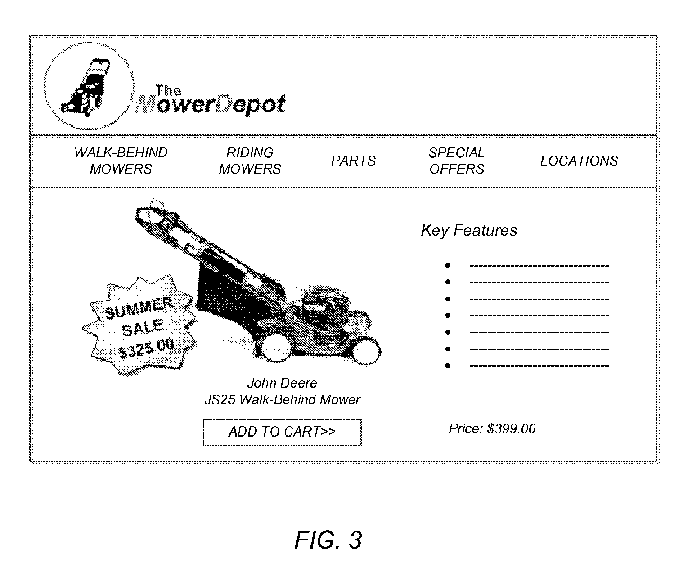

In response to the user clicking on the advertisement 114 on the web page 116, the redirector 110 may cache a user click in the first database 102, and may direct the user from the web page 116 to a landing page 118, such as, for example, the landing page 118 shown in FIG. 3. In response to the user making a purchase on the landing page 118, the conversion tracker 112 may cache a conversion in the first database, and may direct the user from the landing page 118 to a conversion page 120. The first database 102 may optionally store the device data and/or information regarding impressions, clicks, and conversions, etc. as comma separated values (CSV), lists, or files.

The device identifier producer 106 may receive or access the device data (i.e., the user-configurable and/or non-user-configurable machine parameters) stored on the first database 102, and utilize such data to generate a device identifier for the network device. The producer 106 may comprise an application or applet residing on a machine/server with the first database 102. In the alternative, or in addition, the producer may be located on machine/server that is separate from, but in operative communication with, the first database 102 and/or second database 104.

In another embodiment, in response to the user accessing the web page 116 on which the advertisement 114 is displayed, the first database 102 may update an impression count for the advertisement 114. Similarly, in response to the user clicking on the advertisement 114 on the web page 116, the first database may update a click count for the advertisement 114.

In yet another embodiment, the system 100 does not include the conversion tracker 112; rather, the redirector 110 may be in operative communication with the web page 116, the landing page 118, the conversion page 120, and the first database 102. The redirector 110 may take on the role of the conversion tracker 112 in addition to its own role in system 100.

Device Identifiers:

The device identifier may be generated from machine parameters of the network device, such as, for example, hard disk volume name, user name, device name, user password, hard disk initialization date, etc. The machine parameters may relate to the platform on which the web browser runs, such as, for example, CPU number, or unique parameters associated with the firmware in use. The machine parameters may also include system configuration information, such as amount of memory, type of processor, software or operating system serial number, etc. The device identifier generated from the machine parameters may include the network device's IP address and/or other geo-location code to add another layer of specificity to the network device's unique identifier. In the alternative, or in addition, the device identifier may comprise a randomly generated and assigned number that is unique for the network device.

It is noted that an application running on the network device or otherwise having access to the network device's hardware and file system may generate a unique device identifier using a process that operates on data indicative of the network device's configuration and hardware. The device identifier may be generated using a combination of user-configurable and non-user-configurable machine parameters as input to a process that results in the device identifier, which may be expressed in digital data as a binary number. Each machine parameter may include data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier that has a very high probability of remaining unchanged during normal operation of the target device. Thus, the resulting device identifier should be highly specific, unique, reproducible and stable as a result of properly selecting the machine parameters.

The device identifier producer 106 may comprise an application that operates on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating on or otherwise having access to the same field security device on which the device identifier was first generated. Conversely, each identifier, again to a very high degree of certainty, can be successfully reproduced by the suitably configured application operating on or otherwise having access to the same field security device on which the identifier was first generated.

The ActiveX control 115 or the like may operate by performing a system scan to determine a present configuration of the field security device. The producer 106 may then select the machine parameters to be used as input for generating the unique device identifier. Selection of parameters may vary depending on the system configuration. Once the parameters are selected, the producer 106 may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; Blackbox model; Blackbox serial; Blackbox details; Blackbox damage map; Blackbox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

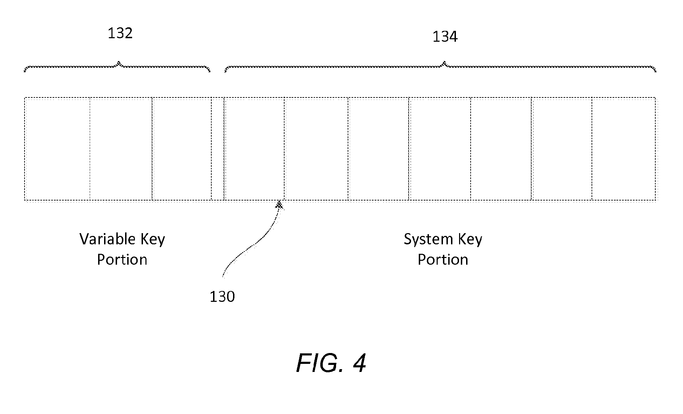

With reference to FIG. 4, in one exemplary embodiment, a device identifier 130 may include two components - namely, a variable key portion 132 and a system key portion 134. The variable key portion 132 may be generated by reference to a variable platform parameter, such as via reference to system time information, although other parameters which are variable may be utilized in other embodiments. The system key portion 134 may include the above described parameters expected to be unique to the network device, such as, for example, hard disk volume name, user name, computer name, user password, hard disk initialization date, or combinations thereof. Portions 132 and/or 134 may be combined with the IP address and/or other platform parameters of the network device.

It is further noted that the device identifiers or machine fingerprints generated by the device identifier producer 106 or the like uniquely identify a given network device when compared to other computers/machines/devices. The device identifier generated for a given device may be tolerant enough to account for minor changes to a device, such as normal wear and tear or minor changes to the configuration of the device. Such built in tolerances to a given device identifier may allow the device hardware to be upgraded or modified over time without affecting the ability to recognize or differentiate the given device.

Analytics:

With reference once again to FIG. 1, the system 100 may comprise the second database 104 that is in operative communication with the device identifier producer 106, the processor module 108, and optionally with a display unit (not shown). The device identifier generated by the producer 106 may be stored in the second database 104, which may comprise an ad database, such as, for example, an OpenX database or the like. Other data that may be cached in the first database 102 (e.g., the cached impression, the cached user click, cached conversion, impressions counts, click counts, conversions counts, etc.) may be stored in the second database 104.

The processor module 108 may analyze the data in the second database 104 in any number of ways and may be used to generate an analytics database or the like. The processor module 108 may comprise an analytics engine, data mining tool, or the like to collect, process, and display statistical information relating, but not limited, to: impressions; clicks; conversions; devices; advertising campaigns (i.e., the actual ads that were clicked on by the user); click through rates (CTR); effective costs per 1000 impressions (ECPM); click fraud information, etc.

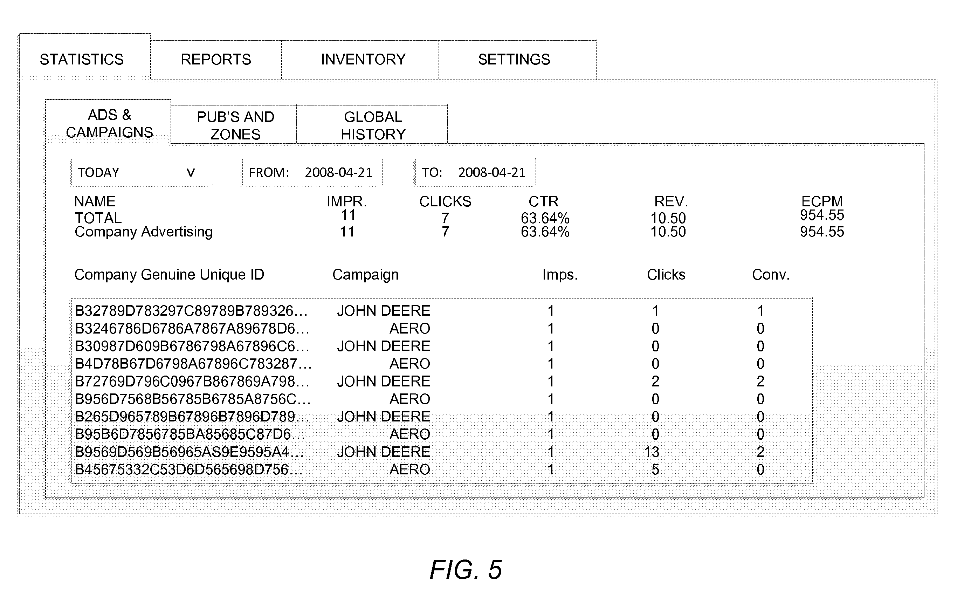

Data regarding impressions, clicks, and/or conversions may be augmented with the device identifier or digital fingerprint of the respective network devices to get a greater understanding about the individuals viewing specific ads. For example, in the embodiment shown in FIG. 5, the processor module 108 may associate the cached impression, the cached user click, and the cached conversion with the device identifier, and may calculate total cached impressions, total cached clicks, and total cached conversions associated with each unique device identifier. The processor module 108 may instruct the display unit to display one or more of the total cached impressions, the total cached clicks, and the total cached conversions for each unique identifier on an analytics page (i.e., a page that displays device statistics for the advertising campaigns).

Data regarding conversions and tracking may be presented in any known way, including tables, charts, etc. For example, the data may be organized by advertising campaigns, or specification ads, total impressions, total clicks, CTRs, revenues, ECPM, etc. The data may further be sorted by genuine unique IDs (i.e., network identifiers), and for each unique ID by advertising campaign, impressions, clicks, and conversions. The data may be extracted from a specific period, advertising campaign, or any other criteria. The display unit may display such information as readable graphs and charts, and may incorporate various color schemes, as well as animation.

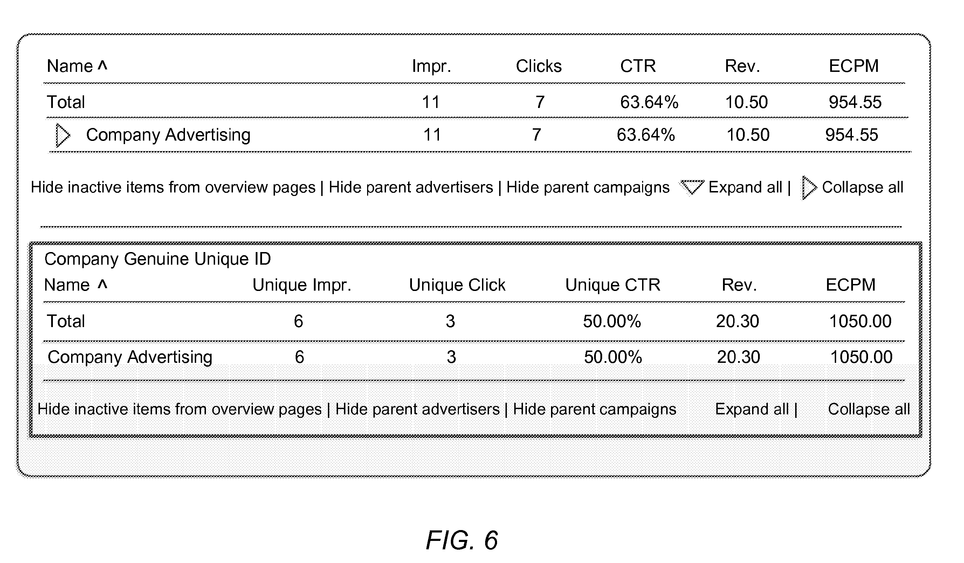

With reference to the FIG. 6, the data stored in the second database 104 may be processed to remove redundant data and/or impressions and clicks resulting from click-fraud. By generating unique signatures (i.e., the device identifiers) for network devices, it is possible to monitor the behavior and impression/clicking/conversion patterns of the network device users, and thereby account for suspicious behavior (e.g., click-fraud). For example, in one approach, the processor module 108 may be adapted to discount or ignore an unusually high number of ad impressions and/or clicks for a given device identifier. The criteria for filtering out or identifying odd or out-of-the-ordinary impression/click behavior may be based on the number of impressions and/or clicks in a defined period. For example, the processor module 108 may be adapted to ignore clicks from a network device if there are more than three clicks associated with the network device's device identifier in a one day period.

By assessing which impressions and/or clicks are associated with which device identifiers, the processor module 108 may determine the total number of unique impressions and unique clicks (i.e., the impressions and clicks that remain after one removes the redundant or suspicious impressions and clicks associated with certain device identifiers), as shown in FIG. 6. The unique CTR may be calculated for each ad by dividing the unique clicks by the unique impressions. Accordingly, the cost-per-impression becomes cost-per-genuine-unique-impression, while cost-per-click becomes cost-per-genuine-unique-click.

In another embodiment, the processor module 108 may associate the cached impression and the cached user click with the device identifier, and may calculate the total cached impressions and total cached clicks associated with the device identifier. For each unique device identifier, the processor module 108 may divide the total cached clicks by the total cached impressions to calculate a device-specific click-through rate. In the alternative, or in addition, the processor module 108 may divide the click count by the impression count to calculate a general click-through rate. The processor module 108 may instruct the display unit to display the device-specific click-through rate and/or the general click-through rate. In the alternative, or in addition, the display unit may display the difference between the device-specific click-through rate and the general click-through rate as a number, graphically, or combinations thereof.

In yet another embodiment, the analytics performed by the processor module 108 with the information in the second database 104 may incorporate geo-location cross-referencing to monitor and compare the behaviors of consumers in different locations.

According to related aspects, the cached/collected data regarding ad impressions, ad clicks, click through rates, revenues, ECPM, ad campaigns, device data, device identifiers, and/or geo-location data, and combinations thereof may be organized and presented in any number of ways (e.g., charts, graphs, line items, folders, etc.). It is noted that the analytics and information presented in FIGS. 5 and 6 are merely exemplary, and that the techniques described herein relate more generally to analyzing and organizing data regarding ad campaigns based at least in part on the device identifiers.

In accordance with one or more embodiments and corresponding disclosure thereof, various aspects are described in connection with identifying a device that is associated with too many ad campaigns, ad impressions, ad clicks, conversions, and/or products sold, or combinations thereof, that is, a number of ad campaigns, ad impressions, ad clicks, etc. greater than normal for a given item (e.g., ad clicks from a given device) or exceeding a defined upper limit (e.g., ad impressions and/or clicks for a given ad campaign from a given device that exceed a defined number, such as ten ad clicks). It is noted that once a device identifier is generated for a given device, it is possible to track or monitor which ads device users are viewing, clicking, and/or converting into actual sales/transactions of products or services.

According to related aspects, geo-location data or codes may be collected from devices. The collected geo-location data may optionally be incorporated into or utilized in generating the unique device identifiers for the devices. In one exemplary approach, the geo-location data comprise IP addresses, information, or the like. The collected geo-location data about the devices may be used to deliver local ads (i.e., ads from stores and establishments located near the device user) and/or geo-targeted/located ads (i.e., ads that are aimed or targeted at people in a particular geographic location).

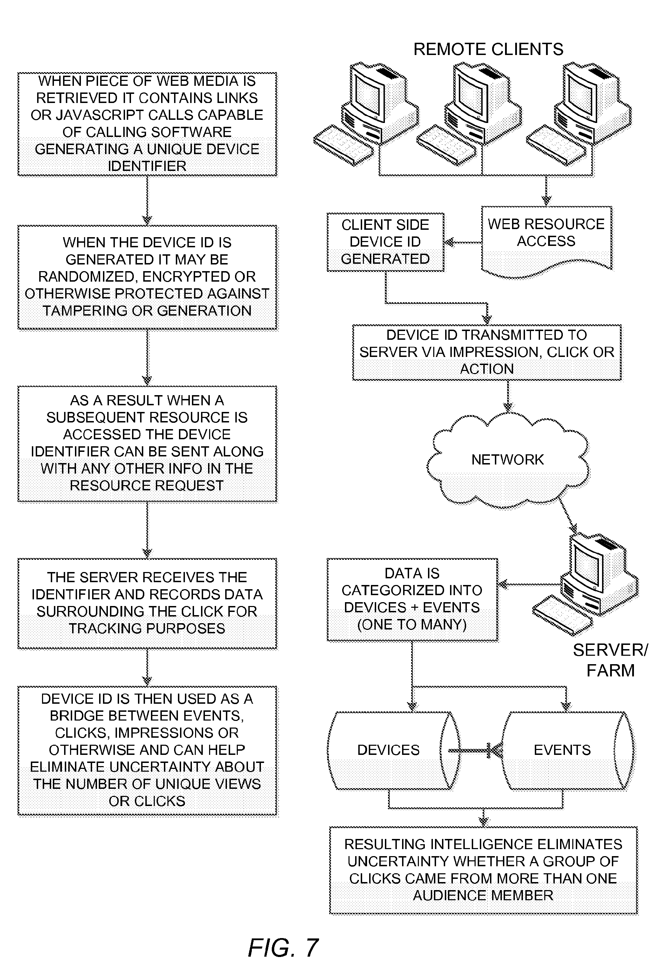

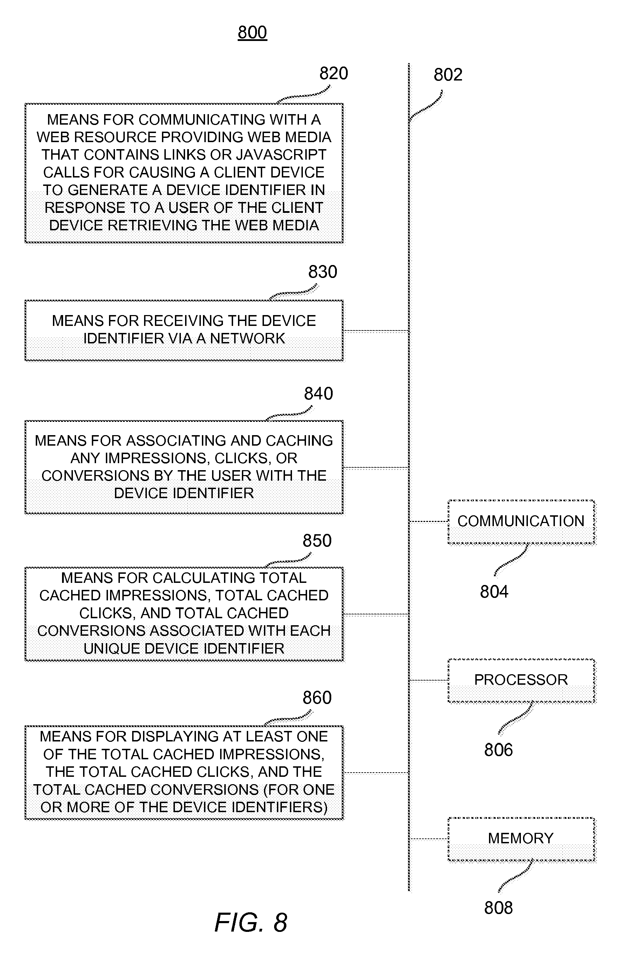

In accordance with one or more aspects of the embodiments described herein, there is provided a system for authenticating a user of a third party online service. An exemplary system is illustrated in FIG. 7. In related aspects, there is provided an exemplary apparatus 800 in FIG. 8 that may be configured as either a computing device, or as a processor or similar device for use within a computing device.

As illustrated, apparatus 800 may comprise a means 820 for communicating with a web resource that provides a web media that contains links or JavaScript calls for causing a client device to generate a device identifier in response to a user of the client device retrieving the web media. Apparatus 800 may comprise a means 830 for receiving the device identifier via a network. Apparatus 800 may comprise a means 840 for associating and caching any impressions, clicks, or conversions by the user with the device identifier. Apparatus 800 may comprise a means 850 for calculating total cached impressions, total cached clicks, and total cached conversions associated with each unique device identifier. Further, apparatus 800 may comprise a means 860 for displaying at least one of the total cached impressions, the total cached clicks, and the total cached conversions (for one or more of the device identifiers).

Apparatus 800 may optionally include a processor module 806 having at least one processor, in the case of apparatus 800 configured as computing device, rather than as a processor. Processor 806, in such case, may be in operative communication with means 820-860, and components thereof, via a bus 802 or similar communication coupling. Processor 806 may effect initiation and scheduling of the processes or functions performed by means 820-860, and components thereof.

Apparatus 800 may include a transceiver/communication module 804 for communicating with mobile nodes and/or other static nodes. A stand alone receiver and/or stand alone transmitter may be used in lieu of or in conjunction with communication module 804.

Apparatus 800 may optionally include a means for storing information, such as, for example, a memory device/module 808. Computer readable medium or memory device/module 808 may be operatively coupled to the other components of apparatus 800 via bus 802 or the like. The computer readable medium or memory device 808 may be adapted to store computer readable instructions and data for effecting the processes and behavior of means 820-860, and components thereof, or processor 806 (in the case of apparatus 800 configured as a computing device) or the methods disclosed herein.

In related aspects, the memory module 808 may optionally include executable code for the processor module 806 to authenticate a user by: (a) communicating with a web resource that provides a web media that contains links or JavaScript calls for causing a client device to generate a device identifier in response to a user of the client device retrieving the web media; (b) receiving the device identifier via a network; (c) associating and caching any impressions, clicks, or conversions by the user with the device identifier; (d) calculating total cached impressions, total cached clicks, and total cached conversions associated with each unique device identifier; and (e) for each unique device identifier, displaying at least one of the total cached impressions, the total cached clicks, and the total cached conversions. One or more of steps (a)-(e) may be performed by processor module 806 in lieu of or in conjunction with the means 820-860 described above.

As noted above, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

In one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; any other predefined hardware information stored (optionally encrypted) in EEPROM; and any variations/combinations thereof.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A system for determining efficacy of online advertising, comprising:
a server connected to a computer network, the server being adapted to provide the functions of:
communicating with a web resource that provides a web media that contains links or JavaScript calls for causing a client device to generate a device identifier in response to a user of the client device retrieving the web media;
receiving the device identifier via a network;
associating and caching any impressions, clicks, or conversions by the user with the device identifier;
calculating total cached impressions, total cached clicks, and total cached conversions associated with each unique device identifier; and
displaying, for each unique device identifier, at least one of the total cached impressions, the total cached clicks, and the total cached conversions.

2. A system for determining efficacy of online advertising, comprising:
a first database adapted to, in response to a user of a network device accessing a web page on which an advertisement is displayed, (a) cache an impression and (b) cache a device identifier associated with the network device;
a redirector in operative communication with the first database and adapted to, in response to the user clicking on the advertisement, (a) report a user click to the first database, and (b) direct the user from the web page to a landing page;
a conversion tracker in operative communication with the first database and adapted to, in response to the user making a purchase on the landing page, (a) report a conversion to the first database, and (b) direct the user from the landing page to a conversion page; and
an efficacy analyzer in operative in operative communication with the first database and adapted to:
associate and cache any impressions, clicks, or conversions by the user with the device identifier; and
calculate total cached impressions, total cached clicks, and total cached conversions associated with each unique device identifier.

3. A method for determining efficacy of online advertising, comprising:
communicating with a web resource that provides a web media that contains links or JavaScript calls for causing a client device to generate a device identifier in response to a user of the client device retrieving the web media;
receiving the device identifier via a network;
associating and caching any impressions, clicks, or conversions by the user with the device identifier;
calculating total cached impressions, total cached clicks, and total cached conversions associated with each unique device identifier; and
displaying, for each unique device identifier, at least one of the total cached impressions, the total cached clicks, and the total cached conversions.

4. The method of claim 3 wherein the device identifier is derived from at least one user-configurable machine parameter and at least one non-user-configurable machine parameter.

5. The method of claim 4, wherein the at least one non-user-configurable machine parameter comprises at least one of a CPU ID, a CPU model, a CPU manufacturer, and a CPU voltage for the client device.

6. The method of claim 4, wherein the at least one non-user-configurable machine parameter is based on a carbon degradation characteristic of a computer chip of the device.

7. The method of claim 4, wherein the at least one non-user-configurable machine parameter is based on a silicone degradation characteristic of a computer chip of the device.

8. The method of claim 4, wherein the at least one user-configurable machine parameter comprises one of hard disk volume name, user name, device name, user password, and hard disk initialization date for the device.

9. The method of claim 4, wherein the device identifier is generated by utilizing at least one irreversible transformation of the at least one user-configurable machine parameter and the at least one non-user-configurable machine parameter of the device.

10. The method of claim 9, wherein the device identifier is generated by utilizing a cryptographic hash function on the at least one user-configurable machine parameter and the at least one non-user-configurable machine parameter of the device.
